**Europäisches Patentamt**

(19) **European Patent Office**

**Office européen des brevets**

(11) Veröffentlichungsnummer: **0 109 453**

**B1**

(12) **EUROPÄISCHE PATENTSCHRIFT**

---

(45) Veröffentlichungstag der Patentschrift:
**15.10.86**

(21) Anmeldenummer: **82110638.2**

(22) Anmeldetag: **18.11.82**

(51) Int. Cl.⁴: **A 01 F 12/44**

---

(54) **Reinigungsvorrichtung für Mähdrescher.**

---

(43) Veröffentlichungstag der Anmeldung:
**30.05.84 Patentblatt 84/22**

(45) Bekanntmachung des Hinweises auf die Patenterteilung:
**15.10.86 Patentblatt 86/42**

(84) Benannte Vertragsstaaten:
**BE DE FR GB IT SE**

(56) Entgegenhaltungen:
**DE-A-2 214 131**
**FR-A-623 640**
**FR-A-1 289 459**
**US-A-1 366 691**
**US-A-2 642 993**
**US-A-2 923 409**

(73) Patentinhaber: **DEERE & COMPANY, 1 John Deere Road, Moline Illinois 61265 (US)**

(72) Erfinder: **Klimmer, Josef W., Virchowstrasse 8, D-6660 Zweibrücken (DE)**

(74) Vertreter: **Sartorius, Peter, DEERE & COMPANY European Office, Patent Department Postfach 503 Steubenstrasse 36- 42, D-6800 Mannheim 1 (DE)**

---

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung bezieht sich auf ein Sieb für die Reinigungsvorrichtung von Mähdreschern, auf dessen Oberfläche zahlreiche in Förderrichtung gesehen hintereinander angeordnete Leitvorrichtungen angeordnet sind, deren Oberflächen geneigt zur Sieboberfläche verlaufen und deren Ablaufkanten jeweils durch zahlreiche nebeneinander angeordnete, fingerartig ausgebildete Vorsprünge gebildet werden.

Es ist bereits ein Mähdrescher mit einer Reinigungsvorrichtung bekannt (Druckschrift PC-4161, 15. Juni 1978, printed in Germany, Seite 120-38), die einen Rücklaufboden aufweist, auf dem zahlreiche mit Bezug auf die Sieboberfläche geneigt verlaufende Lamellen hintereinander angeordnet sind, deren Ablaufkanten aus zahlreichen nebeneinander angeordneten Vorsprüngen bestehen, die dafür sorgen, daß sich keine groben Verunreinigungen in den Sieböffnungen festsetzen, so daß das Erntegut ohne weiteres durch die Sieblochungen abgeschieden werden kann. Die Verbindungslinie, die durch die hintereinander angeordneten Vorsprünge verläuft, verläuft parallel zur Längsmittellinie des Siebes.

Es ist ein Mähdrescher einer Reinigungsvorrichtung bekannt (US-A-2 923 409), die einen Rücklaufboden aufweist, auf dem zahlreiche Lamellen angeordnet sind, deren Ablaufkanten aus nach vorne geneigt verlaufenden Vorsprüngen bestehen. Die hintereinander liegenden Lamellen sind vorwiegend hintereinander angeordnet und verlaufen auf einer in der Hauptförderrichtung des Erntegutes verlaufenden Linie. Dabei sind lediglich in einem bestimmten Bereich des Siebes einige Lamellen gegenüber den nachfolgenden Lamellen seitlich versetzt angeordnet, während die übrigen Lamellen bzw. Vorsprünge genau hintereinander angeordnet sind, so daß insgesamt hierdurch die Hauptströmungsrichtung des auf die Sieboberfläche abgegebenen Erntegutes nicht beeinflußt werden kann.

Demgegenüber liegt der Erfindung die Aufgabe zugrunde, die Lamellen mit ihren fingerartigen Vorsprüngen derart auszubilden und anzuordnen, daß stets eine gleichmäßige Erntegutverteilung auf der Sieboberfläche erfolgt. Diese Aufgabe ist dadurch gelöst worden, daß die Vorsprünge einer Leitvorrichtung derart angeordnet sind, daß die in Längsrichtung des Siebes verlaufende Hauptströmungsrichtung des auf die Sieboberfläche abgegebenen Erntegutes über die Vorsprünge veränderbar ist, wobei die Vorsprünge einer Leitvorrichtung zu den Vorsprüngen der in Längsrichtung des Siebes gesehen nachfolgenden Leitvorrichtung jeweils seitlich versetzt angeordnet sind und die Ablaufkanten mehrerer hintereinander angeordneter Vorsprünge auf einer Linie liegen, die mit der Längsmittelachse des Siebes einen nach hinten offenen und spitzen Winkel $\alpha$ einschließt. Durch die vorteilhafte Ausrichtung der einzelnen Lamellen läßt sich erstmalig mit einfachen baulichen Mitteln das auf der Sieboberfläche ankommende Erntegut beeinflussen, so daß es nicht zu einer Seite des Siebes geleitet wird, sondern so gesteuert wird, daß eine gleichmäßige Erntegutverteilung auf der gesamten Sieboberfläche erfolgt. Hierdurch wird eine optimale Ausscheidung und Trennung des Erntegutes von den Verunreinigungen erzielt. Durch die besondere Führung des Erntegutes wird auch die Verweilzeit des Erntegutes auf der Sieboberfläche vergrößert, so daß eine wirkungsvollere Ausscheidung des Erntegutes gewährleistet wird. Hierzu ist es vorteilhaft, daß mehrere versetzt zueinander angeordnete Leitvorrichtungen eine Gruppe bilden, deren Vorsprünge das Erntegut zur Mitte des Siebes leiten, während die nachfolgenden Leitvorrichtungen mindestens eine weitere Gruppe bilden, die das Erntegut zur Außenseite des Siebes leiten. Durch die seitliche Versetzung der einzelnen Vorsprünge mit Bezug auf die hervorgehenden Vorsprünge läßt sich auch das Erntegut auf einfache Weise mit Bezug auf die Hauptflußrichtung des auf die Sieboberfläche aufgegebenen Erntegutes umlenken, so daß eine Ansammlung des Erntegutes auf einer Seite der Sieboberfläche vermieden werden kann. Hierzu ist es vorteilhaft, daß die durch die Ablaufkanten der Vorsprünge verlaufende Linie einen zickzackförmigen Verlauf aufweist.

Vorteilhaft ist es ferner, daß ein jeder Vorsprung aus zwei nach vorne zusammenlaufenden Kanten gebildet ist, wobei eine Kante in etwa parallel zur Längsmittelachse des Siebes und die andere Kante schräg dazu verläuft, wobei die parallel zur Längsmittelachse verlaufenden Kanten der hintereinander angeordneten Vorsprünge jeweils auf einer Längsebene liegen. Ebenso ist es vorteilhaft, daß jeweils zwei nebeneinander liegende Vorsprünge abwechselnd divergierend und dann konvergierend zueinander verlaufend angeordnet sind und daß die Oberfläche eines jeden Vorsprungs in Form einer Schneckenwendel etwas in Förderrichtung gedreht ist. Durch die besondere Formgebung der einzelnen Vorsprünge erhält man eine seitliche Bewegungskomponente für die Förderung des Erntegutes, so daß auf einfache Weise über den Vorsprung eine Änderung des Erntegutstromes möglich ist. Durch die schneckenformartige Ausbildung des Vorsprunges wird das Erntegut seitlich vom Vorsprung abgelegt und dem nächsten Vorsprung der nachfolgenden Leitvorrichtung zugeführt.

In weiterer Ausgestaltung der Erfindung ist es vorteilhaft, daß die Leitvorrichtungen quer zur Bewegungsrichtung des Erntegutes verstellbar gelagert sind. Da die einzelnen Leitvorrichtungen quer zur Bewegungsrichtung des Erntegutes einstellbar angeordnet sind, lassen sich auf einfache Weise die Vorsprünge derart zueinander ausrichten, daß deren Ablaufkanten untereinander eine Verbindungslinie bilden, die die Längsmittelachse des Siebes in einem spitzen Winkel schneidet. Außerdem ist es durch diese Anordnung möglich, die einzelnen Vorsprünge so zueinander auszurichten, daß sie genau hintereinander verlaufend angeordnet sind. Auf diese Weise ist eine schnelle Anpassung der Siebe für unterschiedliche Arbeiten des Mähdreschers ohne weiteres möglich.

In der Zeichnung sind mehrere Ausführungsbeispiele eines Siebes für eine Reinigungsvorrichtung schematisch dargestellt. Es zeigt:

Fig. 1 eine schematische Darstellung eines Mähdreschers mit einer Reinigungsvorrichtung in Seitenansicht;

Fig. 2 eine perspektivische Darstellung eines Siebes der Reinigungsvorrichtung mit an der Oberfläche des Siebes angeordneten Lamellen;

Fig. 3 eine Draufsicht des Siebes gemäß Fig. 2;

Fig. 4 und 5 zwei verschiedenartige Anordnungen von auf Oberflächen von Sieben angeordneten Lamellen.

In der Zeichnung ist mit 10 ein Mähdrescher bezeichnet, der, mit vorderen Laufrädern 12 und hinteren steuerbaren Laufrädern 14 ausgerüstet ist. An der Vorderseite des Mähdreschers 10 ist eine in der Zeichnung nicht dargestellte Erntebergungsvorrichtung mit einem Schrägfördergehäuse anschließbar, über das das Erntegut einer Dreschtrommel 16 zugeführt wird. Die Dreschtrommel 16 wirkt mit einem Dreschkorb 18 zusammen, durch den das ausgedroschene Erntegut bewegt wird und auf einen Zuführboden 20, der auch als Staffelboden bezeichnet wird, abgegeben werden kann. Oberhalb des Zuführbodens 20 befindet sich ein Hordenschüttler 21 und unterhalb des Hordenschüttlers eine Reinigungsvorrichtung 22, die aus einem oberen Sieb 24 für Kurzstroh und einem unteren Sieb 26 für Kaff besteht.

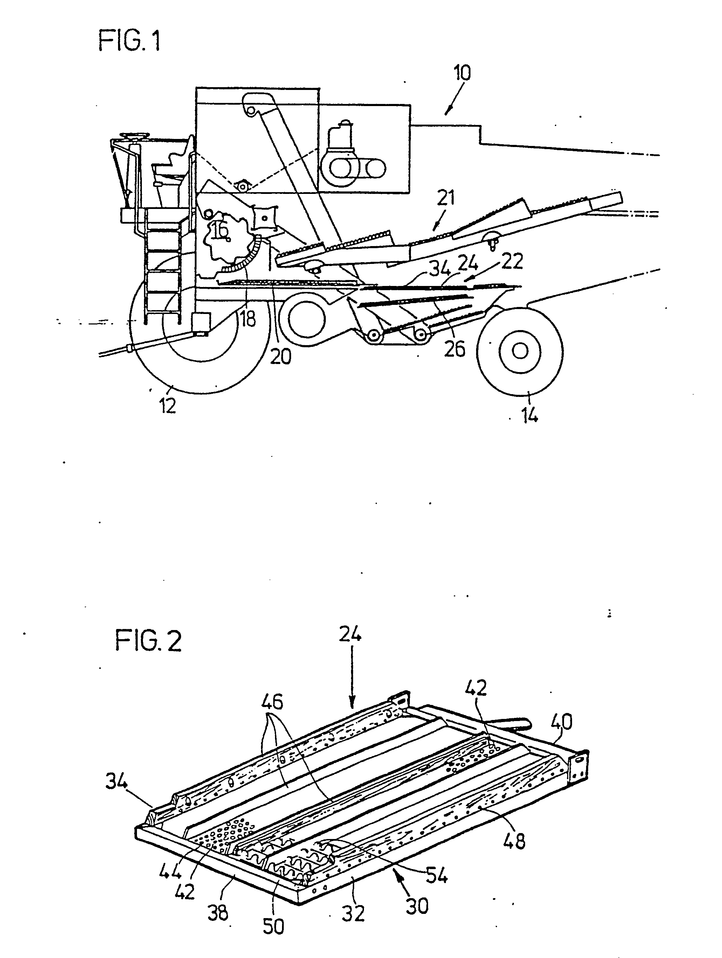

Wie insbesondere aus Fig. 2 hervorgeht, besteht das obere Sieb 24 aus einem rechteckförmigen Rahmen 30, mit sich in Längsrichtung erstreckenden Seitenteilen 32 und 34, die durch vordere und hintere Querträger 38 und 40 miteinander verbunden sind. Auf dem Rahmen 30 befindet sich ein Siebblech 42 mit zahlreichen Öffnungen 44.

Auf dem Siebblech 42 können zahlreiche parallel zueinander verlaufende Hangleisten 46 angeordnet sein, die eine Ausrichtung des Erntegutes in Längsrichtung des Siebes 24 gewährleisten. Das linke sowie rechte Seitenteil 32 und 34 weist zahlreiche nebeneinander angeordnete Bohrungen 48 auf, die zur Aufnahme von je einer in der Zeichnung jedoch nicht dargestellten Achse dienen, die einzeln oder gemeinsam über eine in der Zeichnung nicht dargestellte Stellvorrichtung verstellt werden kann. Auf einer jeden Achse befindet sich eine Leitvorrichtung bzw. eine Lamelle 50, die sich über die gesamte Breite des Siebes 24 erstreckt.

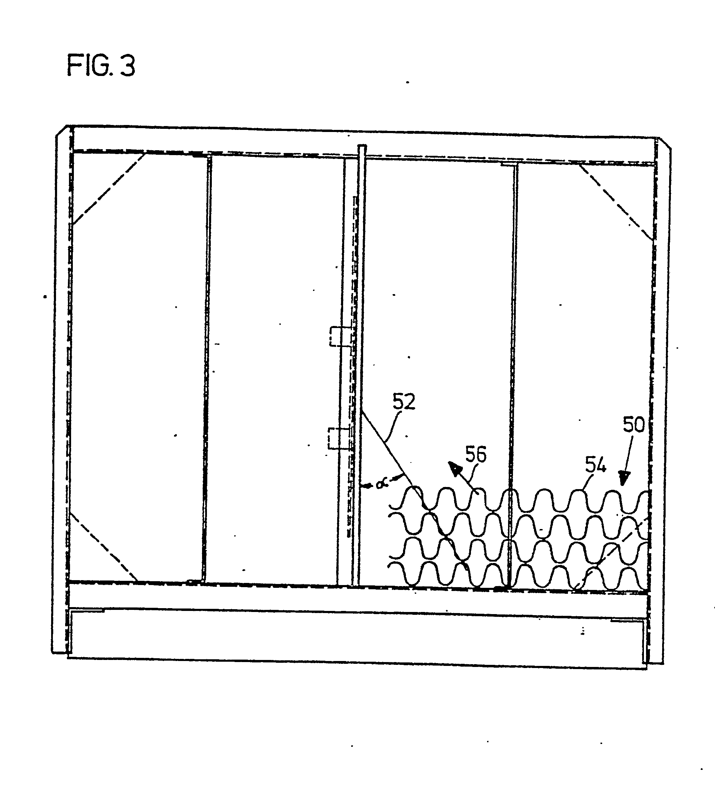

Eine jede Leitvorrichtung bzw. eine jede Lamelle 50 ist mit Bezug auf die Oberfläche des Siebbleches 42 nach hinten geneigt verlaufend angeordnet und bildet mit der Sieboberfläche einen nach hinten offenen und spitzen Winkel. Die in Förderrichtung nach hinten geneigt verlaufenden Lamellen 50 weisen im Bereich ihrer Ablaufkante zahlreiche nebeneinander angeordnete fingerartig ausgebildete Vorsprünge 54 auf, die,wie aus Fig. 3 hervorgeht, an ihrer Ablaufkante abgerundet sein können. Die Lamellen 50 mit den Vorsprüngen 54 gewährleisten, daß das im Erntegut enthaltene Kurzstroh sich nicht auf der Sieboberfläche festsetzt und somit die Öffnungen 44 verstopft. Je nach Art des Erntegutes läßt sich der Anstiegwinkel zwischen der Lamelle 50 und dem Siebblech 42 über die in der Zeichnung nicht dargestellte Stellvorrichtung verändern.

Wie aus Fig. 2 hervorgeht, liegen die beiden mittleren Hangleisten 46 zwischen den einzelnen Einbuchtungen der Vorsprünge 54. Die Hangleisten 46 sind so angeordnet, daß sie eine Verstellung der einzelnen Lamellen 50 nicht behindern. Die auf den in der Zeichnung nicht dargestellten Achsen angeordneten Lamellen 50 lassen sich auch quer zur Bewegungsrichtung des Erntegutes bzw. zur Längsmittelachse des Siebes 24 verstellen. Auf diese Weise können die normalerweise hintereinander liegenden Vorsprünge 54 je nach Beschaffenheit des Erntegutes bzw. den Einsatzbedingungen des Mähdreschers versetzt zueinander ausgerichtet werden (Fig. 3)

Die in Fig. 3 gezeigten Lamellen 50 sind fest mit den einzelnen jedoch nicht dargestellten Achsen verbunden. Die einzelnen Vorsprünge 54 sind mit Bezug auf die in Fahrtrichtung gesehen nachfolgenden Lamellen jeweils seitlich versetzt zueinander angeordnet. Auf diese Weise verläuft eine Verbindungslinie 52, die jeweils durch die Ablaufkante der hintereinander angeordneten Vorsprünge 54 gezogen wird, schräg zur Längsmittelachse des Siebes 24.

Anstelle der in Fig. 3 dargestellten Anordnung der einzelnen Lamellen 50 ist es jedoch auch möglich, die Lamellen 50 in Gruppen zueinander auszurichten. Beispielsweise können mehrere hintereinander angeordnete Vorsprünge 54 auf einer Linie verlaufen, die mit der Längsmittelachse des Siebes 24 einen nach hinten offenen, spitzen Winkel bildet, während eine weitere nachgeordnete Gruppe Lamellen mit ihren Vorsprüngen 54 auf einer Verbindungslinie 52 liegt, die mit der Längsmittelachse des Siebes einen nach vorne offenen, spitzen Winkel α bildet. Auf diese Weise weist die Verbindunglinie 52, die durch die Ablaufkanten der Vorsprünge 54 verläuft, einen zickzack-förmigen Verlauf auf.

Durch die vorteilhafte Anordnung der einzelnen Vorsprünge 54 erhält man eine bessere Führung des Erntegutes und verhindert, daß das Erntegut zu einer Seite des Siebblechs 42 wandert. Arbeitet beispielsweise der Mähdrescher an einem Hang, so wird das auf der Sieboberfläche mehr im Bereich der Außenseite des Siebes 24 abgegebene Erntegut über die einzelnen Vorsprünge 54 stärker zur Mitte geleitet, wenn die Verbindungslinie 52 der einzelnen Vorsprünge mit der Längsmittelachse des Siebes 24 einen nach hinten offenen und spitzen Winkel α einschließt.

Es ist jedoch auch möglich, daß beispielsweise die rechts von der Längsmittelachse angeordneten Vorsprünge 54 nach links zeigen (siehe Verbindungslinie 52), während die links von der Längsmittelachse angeordneten Vorsprünge nach rechts ausgerichtet sind, so daß das Erntegut über die einzelnen Vorsprünge 54 der Lamellen 50 stets zur Mitte geleitet wird.

Weist die Verbindungslinie 52, die durch die Ablaufkante der einzelnen Vorsprünge 54 verläuft, einen zick-zackförmigen Verlauf auf, so kann hierdurch die Verweilzeit des Erntegutes auf der Sieboberfläche vergrößert und somit eine bessere Trennung des Erntegutes von den Verunreinigungen erreicht werden.

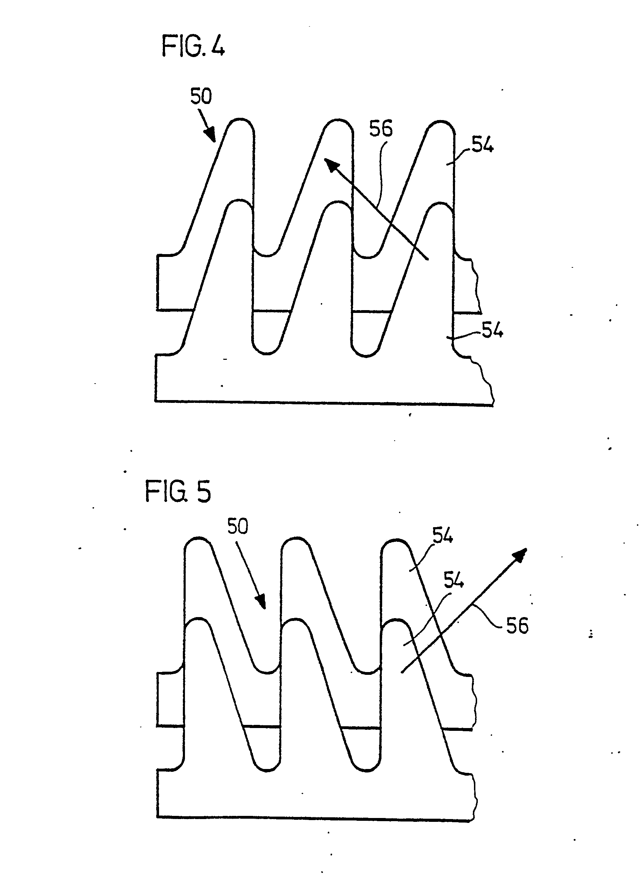

In Fig. 4 und 5 sind verschiedene Anordnungen der einzelnen Vorsprünge 54 der Lamellen 50 dargestellt. Wie aus Fig. 4 hervorgeht, ist die rechte Kante des Vorsprunges 54 parallel zur Längsmittelachse des Siebes 24 angeordnet, während die linke Kante des Vorsprunges 54 mit der rechten Kante einen nach hinten spitzen und offenen Winkel einschließt. Fig. 5 zeigt dagegen einen parallelen Verlauf der linken Kante des Vorsprunges 54 zur Längsmittelachse. Die Verbindungslinien 52 der jeweils hintereinanderliegenden Ablaufkanten der Vorsprünge 54 können in beiden Fällen ebenfalls parallel zur Längsmittelachse verlaufen. Durch die Anordnung der Vorsprünge 54 gemäß Fig. 4 wird das Erntegut nach links und durch die Anordnung der Vorsprünge gemäß Fig. 5 nach rechts geleitet. Die einzelnen Vorsprünge 54 können in Pfeilrichtung 56 etwas nach außen abgebogen sein, um die Abgabe des Erntegutes in Pfeilrichtung 56 zu unterstützen. Ebenso ist es möglich, die Vorsprünge 54 etwas schraubenförmig auszubilden, so daß das Erntegut ohne weiteres in Pfeilrichtung 56 weiterbewegt wird.

**Patentansprüche**

1. Sieb für die Reinigungsvorrichtung (22) von Mähdreschern (10), auf dessen Oberfläche zahlreiche in Förderrichtung gesehen hintereinander angeordnete Leitvorrichtungen (50) angeordnet sind, deren Oberflächen geneigt zur Sieboberfläche verlaufen und deren Ablaufkanten jeweils durch zahlreiche nebeneinander angeordnete, fingerartig ausgebildete Vorsprünge (54) gebildet werden, dadurch gekennzeichnet, daß die Vorsprünge (54) einer Leitvorrichtung (Lamelle 50) derart angeordnet sind, daß die in Längsrichtung des Siebes (24) verlaufende Hauptströmungsrichtung des auf die Sieboberfläche abgegebenen Erntegutes über die Vorsprünge (54) veränderbar ist, wobei die Vorsprünge (54) einer Leitvorrichtung (Lamelle 50) zu den Vorsprüngen der in Längsrichtung des Siebes (24) gesehen nachfolgenden Leitvorrichtung jeweils seitlich versetzt angeordnet sind und die Ablaufkanten mehrerer hintereinander angeordneter Vorsprünge (54) auf einer Linie (52) liegen, die mit der Längsmittelachse des Siebes einen nach hinten offenen und spitzen Winkel α einschließt.

2. Sieb nach einem oder mehreren der vorherigen Ansprüche, dadurch gekennzeichnet, daß mehrere versetzt zueinander angeordnete Leitvorrichtungen (Lamellen 50) eine Gruppe bilden, deren Vorsprünge (54) das Erntegut zur Mitte des Siebes (24) leiten, während die nachfolgenden Leitvorrichtungen mindestens eine weitere Gruppe bilden, die das Erntegut zur Außenseite des Siebes (24) leiten.

3. Sieb nach einem oder mehreren der vorherigen Ansprüche, dadurch gekennzeichnet, daß die durch die Ablaufkanten der Vorsprünge (54) verlaufende Linie einen zick-zackförmigen Verlauf aufweist.

4. Sieb nach einem oder mehreren der vorherigen Ansprüche, dadurch gekennzeichnet, daß ein jeder Vorsprung (54) aus zwei nach vorne zusammenlaufenden Kanten gebildet ist, wobei eine Kante in etwa parallel zur Längsmittelachse des Siebes und die andere Kante schräg dazu verläuft, wobei die parallel zur Längsmittelachse verlaufenden Kanten der hintereinander angeordneten Vorsprünge (54) jeweils auf einer Längsebene liegen.

5. Sieb nach einem oder mehreren der vorherigen Ansprüche, dadurch gekennzeichnet, daß jeweils zwei nebeneinander liegende Vorsprünge (54) abwechselnd divergierend und dann konvergierend zueinander verlaufend angeordnet sind.

6. Sieb nach einem oder mehreren der vorherigen Ansprüche, dadurch gekennzeichnet, daß die Oberfläche eines jeden Vorsprungs (54) in Form einer Schneckenwendel etwas in Förderrichtung gedreht ist.

7. Sieb nach einem oder mehreren der vorherigen Ansprüche, dadurch gekennzeichnet, daß die Leitvorrichtungen (Lamelen 50) quer zur Bewegungsrichtung des Erntegutes verstellbar gelagert sind.

**Claims**

1. Sieve for the cleaning equipment (22) of combine harvesters (10), on whose surface there are disposed numerous conveying devices (59) arranged in series as seen in the direction of conveyance, the surfaces of which extend inclined with respect to the surface of the sieve and the trailing edges of which are formed in each case by numerous projections (54) arranged side by side and of finger-like form, characterised in that the projections (54) of a conveying device (lamina 50) are arranged in such manner that the main flow direction of the harvested material delivered on to the surface of the sieve (24) and extending in the longitudinal direction of the sieve is variable by means of the projections (54), the projections (54) of one conveying device (lamina 50) being arranged staggered laterally in each case with respect to the projections of the following conveying device as seen in the longitudinal direction of the sieve and the trailing edges of a plurality of projections (54) arranged one behind the other being located on a line (52) enclosing a rearwardly open and acute angle α with the longitudinal centre axis of the sieve.

2. Sieve according to one or more of the preceding claims, characterised in that a plurality of conveying devices (laminae 50) arranged staggered with respect to one another form a group whose projections (54) direct the harvested material to the middle of the sieve (24), while the following conveying devices form at least another group which direct the harvested material to the outside of the sieve (24).

3. Sieve according to one or more of the preceding claims, characterised in that the line extending through the trailing edges of the projections (54) has a zig-zag course.

4. Sieve according to one or more of the preceding claims, characterised in that each projection (54) is formed of two forwardly converging edges, one edge extending substantially parallel to the longitudinal centre axis of the sieve and the other edge obliquely with respect thereto, the edges of the projections (54) arranged one behind the other and extending parallel to the longitudinal centre axis being located in each case in a longitudinal plane.

5. Sieve according to one or more of the preceding claims, characterised in that each two projections (54) located side by side are arranged extending alternately diverging and then converging with respect to one another.

6. Sieve according to one or more of the preceding claims, characterised in that the surface of each projection (54) is slightly twisted in the direction of conveyance in the form of a worm spiral.

7. Sieve according to one or more of the preceding claims, characterised in that the conveying devices (laminae 50) are mounted to be adjustable transversely of the direction of movement of the harvested material.

**Revendications**

1.- Crible pour ensemble de nettoyage (22) de moissonneuses-batteuses (10) sur la surface duquel sont disposés un grand nombre de dispositifs de guidage (50) placés l'un derrière l'autre quand on considère la direction de transport des produits, dont les surfaces sont inclinées par rapport à la surface du crible et dont les bords d'échappement sont formés chaque fois par de nombreuses protubérances (54) en forme de doigts, disposées les unes à côté des autres, caractérisé en ce que les protubérances (54) d'un dispositif de guidage (lamelle 50) sont disposées de telle sorte que la direction de progression principale, orientée dans la direction longitudinale du crible (24), des produits de récolte déposés sur la surface du crible et passant au-dessus des protubérances (54) puisse être modifiée, les protubérances (54) d'un dispositif de guidage (lamelle 50) étant décalées chaque fois latéralement par rapport aux protubérances du dispositif de guidage suivant quand on considère la direction longitudinale du crible (24) et les bords d'échappement de plusieurs protubérances (54) disposées l'une derrière l'autre se trouvant sur une ligne (52), qui fait, avec l'axe longitudinal médian du crible, un angle aigu α ouvert en direction de l'arrière.

2.- Crible suivant la revendication 1, caractérisé en ce que plusieurs dispositifs de guidage (lamelles 50) décalés l'un par rapport à l'autre forment un groupe dont les protubérances (54) dirigent les produits de récolte vers le milieu du crible (24), tandis que les dispositifs de guidage suivants forment au moins un autre groupe qui dirige les produits de récolte vers le côté extérieur du crible (24).

3.- Crible suivant une ou plusieurs des revendications précédentes, caractérisé en ce que la ligne passant par les bords d'échappement ou de sortie des protubérances (54) présente un profil en zig-zag.

4.- Crible suivant une ou plusieurs des revendications précédentes, caractérisé en ce que chaque protubérance (54) est formée par deux bords allant en convergeant vers l'avant, un bord étant sensiblement parallèle à l'axe longitudinal médian du crible, tandis que l'autre bord est incliné par rapport à cet axe, les bords orientés parallèlement à l'axe longitudinal du crible des protubérances (54) disposées l'une derrière l'autre se trouvant chaque fois dans un plan longitudinal.

5.- Crible suivant une ou plusieurs des revendications précédentes, caractérisé en ce que deux protubérances (54) disposées l'une à côté de l'autre sont disposées chaque fois en alternance en divergeant, puis en convergeant, l'une par rapport à l'autre.

6.- Crible suivant une ou plusieurs des revendications précédentes, caractérisé en ce que la surface de chaque protubérance (54) est recourbée en forme de filet de vis, sensiblement dans la direction de transport.

7.- Crible suivant une ou plusieurs des revendications précédentes, caractérisé en ce que les dispositifs de guidage (lamelles 50) sont montés de façon déplaçable transversalement à la direction de progression des produits de récolte.

0 109 453

FIG. 1

10

21

34 24 22

16

26

18

20

12

14

FIG. 2

24

46

42

40

34

48

44

42

38

50

32

54

30

1

FIG. 3

FIG. 4

FIG. 5